# EUROPÄISCHE PATENTSCHRIFT

(11) **EP 0 598 733 B1**
(45) Veröffentlichungstag und Bekanntmachung des Hinweises auf die Patenterteilung: **21.02.1996**
(21) Anmeldenummer: 92911590.5
(22) Anmeldetag: 15.06.1992
(51) Int. Cl.: G01G 19/56, G01G 3/02, G01G 23/20

(54) **FEDERWAAGE**
SPRING BALANCE
BALANCE A RESSORT

(43) Veröffentlichungstag der Anmeldung: 01.06.1994
(73) Patentinhaber: CREATECHNIC AG, CH-8305 Dietlikon (CH)
(72) Erfinder: DUBACH, Werner, Fritz, CH-8124 Maur (CH)
(74) Vertreter: Feldmann, Paul David
(86) Internationale Anmeldenummer: CH9200115
(87) Internationale Veröffentlichungsnummer: WO9325873

(56) Entgegenhaltungen:
- DE-A- 2 637 972
- GB-A- 2 205 169
- US-A- 1 750 193
- US-A- 3 229 780
- US-A- 3 848 689

## Beschreibung

Die Erfindung bezieht sich auf eine Federwaage mit zwei mit Spiel teleskopisch ineinander verschiebbarem durch ihre Querschnittsform nicht drehbaren, eine Feder umschliessenden, rohrförmigen Gehäuseteilen.

Die Erfindung stellt sich zur Aufgabe eine Federwaage mit mehreren Ableseskalen zu schaffen, die dadurch verschiedenen Anwendungszwecken dienen kann. Sie kann mit Vorteil als Löffelwaage ausgebildet sein.

Die Erfindung löst diese Aufgabe mit einer Federwaage die die besonderen Merkmale des Patentanspruches 1 aufweist. Eine besonders vorteilhafte Anwendung ergibt sich wenn die Federwaage als Löffelwaage ausgebildet ist und deren Ableseskalen nach dem Kalorienwert unterschiedlicher Esswaren eingeteilt sind. Die Waage kann auch als Kalorienwaage dienen. Die Skalen können auch nach Gramm und englischen Gewichtseinheiten wie ounce eingeteilt sein.

In der beigefügten Zeichnung ist ein Ausführungsbeispiel des Erfindungsgegenstandes dargestellt:
- Figur 1: zeigt eine als Löffelwaage ausgebildete Federwaage;
- Figur 2: einen Schnitt längs der Linie II-II in Figur 1, in grösserem Masstab;
- Figur 3: eine perspektivische Darstellung des Skalenteiles der Waage nach Figur 1 in grösserem Masstab und
- Figur 4: eine Tabelle

Die als Löffelwaage ausgebildete Federwaage weist als Hauptbestandteile einen oberen Gehäusteil 1, einen äusseren, unteren Gehäuseteil 2 und eine im Innern angeordnete Zugfeder 3 auf. Der obere Gehäuseteil 1 ist oben mit einem Haken 11 verbunden. Der äussere Gehäuseteil 2 findet nach unten eine Fortsetzung in Form eines Löffelstieles 21 mit einer Schöpfkelle 22.

Der äussere Gehäuseteil ist von einem durchsichtigen Hohlzylinder 4 umgeben, auf dem mehrere am Unfang verteilte Ableseskalen angebracht sind. Dieser Hohlzylinder ist drehbar, aber axial fest am äusseren Gehäuseteil gehalten. Dazu dienen die beiden Flansche 23 und 24.

Am inneren, oberen Gehäuseteil 1 ist eine Anzeigezunge 12 angebracht, die durch einen im äusseren Gehäuseteil 2 angbrachten Längsschlitz 25 hindurchragt, bis nahe an die Innenwand des durchsichtigen Hohlzylinders 4 reicht.

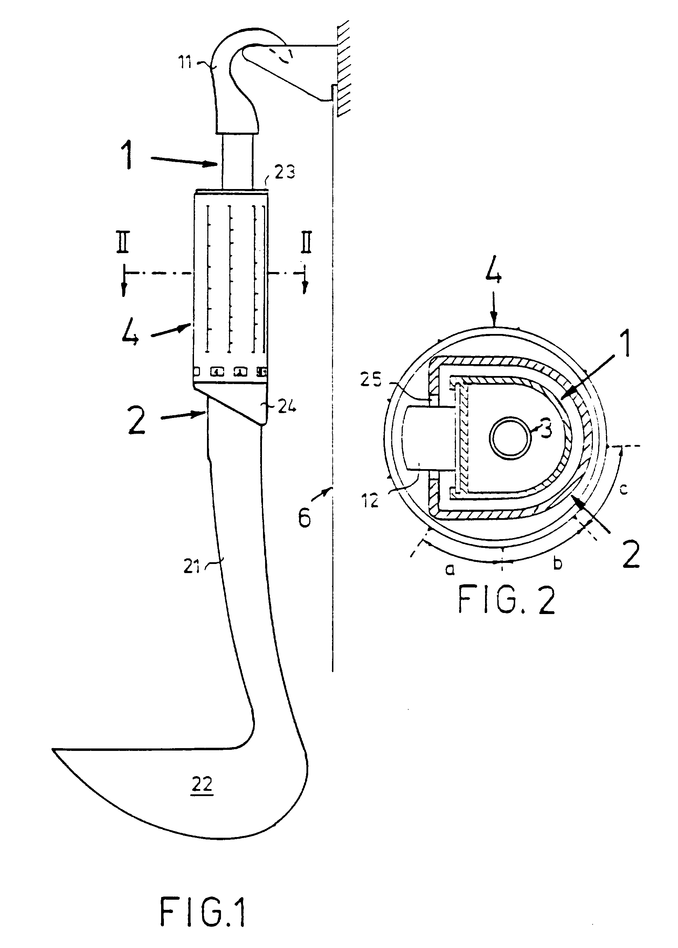

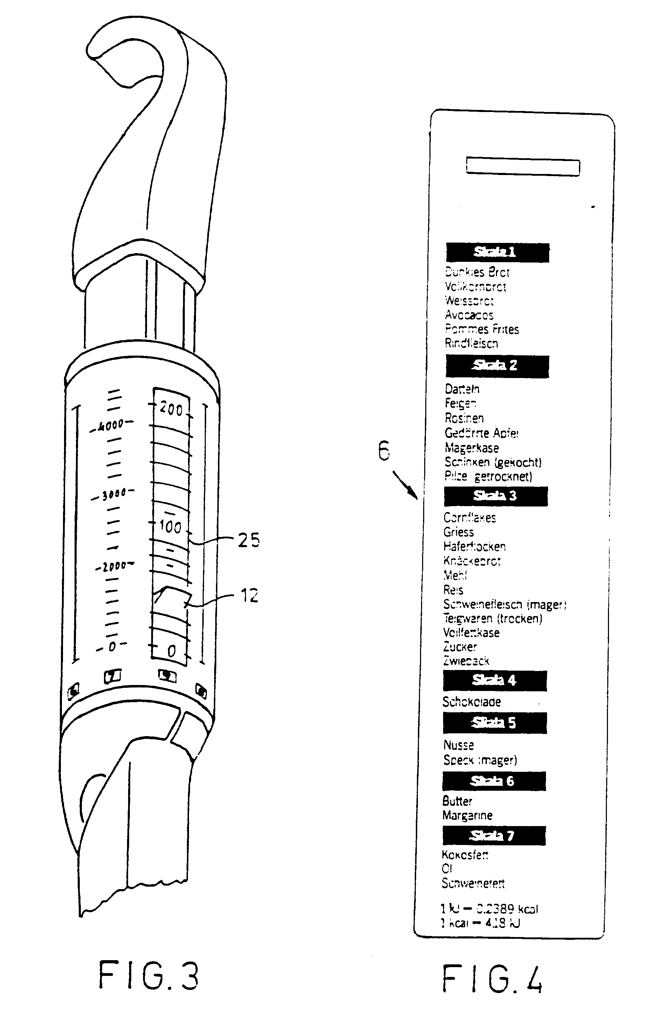

Auf der Aussenwand des Hohlzylinders sind mehrere unterschiedliche Skaleneinteilungen angebracht. Die Figuren 2 und 3 zeigen den Skalenteil der Federwaage in grösserem Masstab. Es stehen neun unterschiedliche Skalen, a,b,c.... zur Verfügung. Eine Skala zeigt das in die Schöpfkelle eingefüllte Gewicht in Gramm an, eine zweite Skala das Gewicht in Ounces. Die restlichen sieben Skalen sind in Kalorienwerte unterschiedlicher Nahrungsmittelgruppen in Kilo-Joule eingeteilt. Damit man weiss für welche Nahrungsmittelgruppe welche Skala benützt werden muss, wird eine Tabelle 6 wie in Figur 4 dargestellt verwendet. Dies hat grosse Vorteile.

Personen die sich entweder aus freiem Willen oder auf Verordnung einer Diät unterziehen, müssen den Kalorienwert der verschiedenen Esswaren kennen und berücksichtigen. Dazu steht die Tabelle nach Figur 4 zur Verfügung, die den Kalorienwert unterschiedlicher Esswaren, beispielsweise in Kilo-Joule oder Kilo-Kalorien pro Gewichteinheit angeben. Will man sich an Hand einer solchen Tabelle ein Menü selber zusammenstellen, verlangt dies eine erhebliche Rechenarbeit.

Der Benützer der Kalorienwaage muss dann nur noch auf der Tabelle nachsehen unter welche Gruppe das Nahrungsmittel eingeteilt ist und durch drehen des Zylinders 4 die entsprechende Skala ablesbar machen. Die Skalen sind unten entsprechend nummeriert wie aus Figur 3 ersichtlich.

Statt die zur Verfügung stehenden Skalen so einzuteilen wie oben beschrieben, können sie auch nach Volumen für Schüttgut wie Mehl oder Reis oder Flüssigkeit mit unterschiedlichem spezifischen Gewicht eingeteilt sein. In Kochrezepten sind die zu verwendenden Mengen oft in so und sovielen Suppenlöffel, Esslöffel oder Teelöffel angegeben. Für technische Bereiche können die Skalen auch nach Stückzahlen geeicht sein, beispielsweise nach der Anzahl Schrauben, Muttern, Nägeln oder Hohlnieten. Da die Stückzahlmessung nicht sehr genau sein kann, kommt sie nur für relativ billige Teile in Frage.

Die Anzeigezunge 12 ist, wie in Figur 2 ersichtlich mittels eines Schiebers am oberen Teil 1 gehalten. Sie kann daher bei der Montage zwecks Justierung, bzw. Einstellung auf den Nullwert verschoben werden.

Die bei der Verwendung als Kalorienwaage erforderliche Tabelle 6 (Figur 4) kann beispielsweise gemeinsam mit einem an einer Wand befestigbaren Haken aufgehängt werden wie dies in Figur 1 angedeutet ist.

## Patentansprüche

1. Federwaage, mit zwei mit Spiel teleskopisch ineinander verschiebbaren, durch ihre Querschnittsform nicht drehbaren, eine Feder umschliessenden, rohrförmigen Gehäuseteilen, dadurch gekennzeichnet, dass der äussere Gehäuseteil (2) mit einem Längsschlitz (25) versehen ist, durch den eine mit dem inneren Gehäuseteil (1) verbundene Anzeigezunge (12) mit seitlichem Spiel hindurchragt und dass am äusseren Gehäuseteil (2) ein denselben umschliessender, durchsichtiger Hohlzylinder (4) drehbar angebracht ist, der mehrere am Umfang verteilte Ableseskalen aufweist.

2. Federwaage nach Anspruch 1, dadurch gekennzeichnet, dass der innere Gehäuseteil (1) an seinem oberen Ende mit einem Aufhängehaken (11) und der äussere Gehäuseteil (2) an seinem unteren Ende mit einer Schöpfkelle (22) versehen ist.

3. Federwaage nach Anspruch 2 ausgebildet als Kalorienwaage, dadurch gekennzeichnet, dass deren Ableseskalen (a,b...) Einteilungen aufweisen, die nach Kalorien eingeteilt sind, und dass eine separate Tabelle angibt, welche Skala für welches Essware gilt.

4. Federwaage nach Anspruch 2, dadurch gekennzeichnet, dass deren Ableseskalen Einteilungen nach Gramm und nach englischen Masseinheiten aufweisen.

5. Federwaage nach Anspruch 2, dadurch gekennzeichnet, dass deren Ableseskalen nach Volumen eingeteilt sind.

6. Federwaage nach Anspruch 2, dadurch gekennzeichnet, dass deren Skalen nach Stückzahlen bekannter Teile eingeteilt sind.

## Claims

1. Spring balance having two tubular casing sections which can be telescoped into one another, which do not rotate as a result of their cross-sectional shape and surround a spring, characterized in that the outer casing section (2) is provided with a longitudinal slot (25) through which projects with a lateral clearance an indicator tag (12) connected to the inner casing section (1) and that on the outer casing section (2) is fitted in rotary manner a transparent hollow cylinder (4) surrounding the latter and which has a plurality of circumferentially distributed scales.

2. Spring balance according to claim 1, characterized in that the inner casing section is provided at its upper end with an attachment hook (11) and the outer casing section (2) has at its lower end a pan (22).

3. Spring balance according to claim 2 constructed as a calorie balance, characterized in that its scales (a, b, etc.) have graduations based on calories, and that a separate table indicates which scale applies for which food.

4. Spring balance according to claim 2, characterized in that its scales has graduations in grams and according to imperial units of measure.

5. Spring balance according to claim 2, characterized in that its scales are graduated by volume.

6. Spring balance according to claim 2, characterized in that its scales are graduated according to numbers of known items.

## Revendications

1. Balance à ressort comprenant deux parties de boîtier tubulaires pouvant coulisser l'une dans l'autre avec jeu de façon télescopique, qui renferment un ressort et qui, du fait de la forme de leur section transversale, ne peuvent pas tourner, caractérisée en ce que la partie de boîtier extérieure (2) est munie d'une fente longitudinale (25) que traverse avec un jeu latéral une languette indicatrice (12) reliée à la partie de boîtier intérieure (1), et en ce que sur la partie de boîtier extérieure (2) est monté de manière à pouvoir tourner un cylindre creux transparent (4) entourant cette dernière, qui présente plusieurs échelles réparties sur le pourtour.

2. Balance à ressort selon la revendication 1, caractérisée en ce que la partie de boîtier intérieure (1) est munie d'un crochet de suspension (11) à son extrémité supérieure et la partie de boîtier extérieure (2) d'une puisette (22) à son extrémité inférieure.

3. Balance à ressort selon la revendication 2 réalisée sous la forme d'une balance calorique, caractérisée en ce que ses échelles (a, b...) présentent des graduations en calories, et en ce qu'un tableau séparé indique quelle échelle vaut pour quel aliment.

4. Balance à ressort selon la revendication 2, caractérisée en ce que ses échelles présentent des graduations en grammes et en unités de masse anglaises.

5. Balance à ressort selon la revendication 2, caractérisée en ce que ses échelles sont graduées en volumes.

6. Balance à ressort selon la revendication 2, caractérisée en ce que ses échelles sont graduées en unités d'éléments connus.
